# EUROPEAN PATENT APPLICATION

(11) **EP 4 197 488 A1**
(43) Date of publication of application: **21.06.2023**
(21) Application number: 22170419.0
(22) Date of filing: 28.04.2022
(51) Int. Cl.: A61C 17/22, A46B 9/04

(54) **ADAPTABLE MOUTHPIECE ASSEMBLY FOR TOOTH CLEANING**

(30) Priority: 16.12.2021 US 202163290244 P
(71) Applicant: Koninklijke Philips N.V., 5656 AG Eindhoven (NL)
(72) Inventor: PETRELLI, Marcus Cornelis, Eindhoven (NL); DE VRIES, Alwin William, Eindhoven (NL)
(74) Representative: Philips Intellectual Property & Standards

(57) **Abstract**

Devices and methods for applying oral care with an adaptable mouthpiece assembly. The adaptable mouthpiece assembly includes a support plate configured to be inserted in a mouth of a user, and a chain member configured to accommodate a section of teeth and gum of the user. The chain member includes a plurality of shackles that are arranged successively on the support plate and that are hingeably coupled to each other. A posterior shackle is coupled to the support plate via a first fixed pivot. An anterior shackle is coupled to the support plate via a movable pivot. A configuration of the plurality of shackles is adjustable by allowing the plurality of shackles to move freely in a horizontal plane along the support plate between the first fixed pivot and the movable pivot.

## Description

### FIELD OF THE INVENTION

The present disclosure relates generally to mouthpieces used for oral care applications and more specifically concerns mouthpiece assemblies that are adaptable to fit dental arches of different users.

### BACKGROUND OF THE INVENTION

Mouthpieces that provide partial or whole mouth tooth cleaning are becoming more common. To provide effective cleaning, such mouthpiece and the brushing surfaces thereof require adjustment to fit closely the shape of a user's dental arch. However, dental arches vary greatly among different users due to varying sizes of the dental arch, malocclusion, missing teeth, and the like.

Mechanical driven mouthpieces are on the one hand required to be flexible enough to adapt to dental arches of different users, while on the other hand they are also required to have an amount of stiffness so that power from a driving mechanism is distributed equally over the entire mouthpiece and is capable of disrupting dental plaque on tooth surfaces. In some cases, the teeth may be used to deform the mouthpiece to fit the tooth geometry. However, when bristles are used to clean the teeth, the bristles will also become deformed by the teeth to obtain the "correct" mouthpiece shape and do not function properly. Additionally, the forces applied to obtain the correct mouthpiece shape contribute to high friction of the mouthpiece with respect to the teeth. Many applications require the user to move the mouthpiece to clean all the teeth which becomes more difficult when high friction is involved.

### SUMMARY OF THE INVENTION

There is a need for improved devices and methods for oral care applications that provide an adjustable mouthpiece that can fit the dental arches of a large percentage of the population.

Accordingly, it is an objective of this disclosure to reduce the forces needed to have the mouthpiece adapt to the dental arch anatomy. Better adaptation to dental anatomy leads to better performance of the oral care application because bristle deformations can be reduced, and movement of the device in the mouth is facilitated. Furthermore, the flexibility provided by a single adaptable mouthpiece leads to less sizes of mouthpieces to cover the range of human-teeth geometry.

According to the implementations and embodiments described herein addressing such a need, a mouthpiece assembly is provided for oral care application. The mouthpiece assembly includes a support plate configured to be inserted in a mouth of a user and a chain member configured to accommodate a section of teeth and gum of the user. The support plate has a distal portion and a proximal portion. The chain member includes a plurality of shackles that are arranged successively on the support plate and that are hingeably coupled to each other. A posterior shackle of the chain member is coupled to the support plate via a first fixed pivot in the distal portion of the support plate. An anterior shackle is coupled to the support plate via a movable pivot in the proximal portion of the support plate. A configuration of the chain member is adjustable by allowing the plurality of shackles to move freely in a horizontal plane along the support plate between the first fixed pivot and the movable pivot such that the configuration of the chain member adapts to a curvature of a dental arch at the section of teeth and gum to be treated.

In some embodiments, the plurality of shackles are movable along the support plate in an anterior-posterior direction and in a lateral-medial direction. In some embodiments, the anterior shackle is hingeably coupled to the support plate via a second fixed pivot point. In further embodiments, the movable pivot is located on an arm and the arm is coupled to the support plate via a second fixed pivot. The second fixed pivot can be coupled to the support plate in the proximal portion of the support plate. In some embodiments, an angle formed between the arm and an exterior surface of the anterior shackle is between about 0 degrees and about 45 degrees. In some embodiments, a penultimate shackle of the chain member is coupled to the support plate via a second fixed pivot. In some embodiments, the plurality of shackles includes a U-shaped vertical cross-section. In some embodiments, the plurality of shackles are coupled to each other via a hingeable connection element. In some embodiments, the hingeable connection element between the plurality of shackles extends along a lingual vertical wall of the U-shaped shackles. In further embodiments, the chain member includes at least three shackles. In yet further embodiments, at least one of the plurality of shackles includes a cleaning material.

In some implementations, an oral care device includes an upper mouthpiece assembly for receiving a section of teeth and gum situated in an upper jaw of a user, a lower mouthpiece assembly for receiving a section of teeth and gum situated in a lower jaw of the user, and a driving mechanism to provide relative vertical movement of the upper mouthpiece assembly and the lower mouthpiece assembly. The upper mouthpiece assembly and/or the lower mouthpiece assembly may include a mouthpiece assembly as described herein.

The subject matter described herein further includes a method for applying oral care, including the steps of obtaining an oral care device that includes an adaptable mouthpiece assembly as described herein, inserting the mouthpiece assembly into the mouth of the user, whereby the chain member is in an undefined configuration prior to insertion, allowing the posterior shackle to make contact with the section of teeth and gum, fitting the mouthpiece assembly to the mouth of the user such that the chain member conforms to the dental arch of the section of teeth and gum to be treated, and applying an oral care procedure to the section of teeth and gum.

These and other aspects of the disclosure will be apparent from and elucidated with reference to the embodiment(s) described hereinafter.

### BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the inventive subject matter.
FIG. 1 is a simplified top view of an embodiment of an adaptable mouthpiece assembly according to the inventive subject matter.
FIG. 2 is an isometric view of the adaptable mouthpiece assembly of FIG. 1.
FIG. 3 is a simplified isometric view of the mouthpiece assembly of FIG. 1 as applied to upper teeth and gum.
FIG. 4 is a simplified isometric view of a detail of a shackle provided with bristles in accordance with an embodiment of the invention.
FIG. 5 is a schematic top view of the adaptable mouthpiece assembly of FIG. 3 as positioned relative to the upper dental arch and illustrating the movement force from the handle on the front shackle.
FIG. 6 is a high-level flow chart of an exemplary method for oral care application with an adaptable mouthpiece assembly.

### DETAILED DESCRIPTION OF EMBODIMENTS

The disclosed subject matter will become better understood through review of the following detailed description in conjunction with the figures. The detailed description and figures provide example embodiments of the invention described herein. Those skilled in the art will understand that the disclosed examples may be varied, modified, and altered without departing from the scope of the invention described herein. The present invention may take form in various components and arrangements of components, and in various techniques, methods, or procedures and arrangements of steps. The referenced drawings are only for the purpose of illustrated embodiments and are not to be construed as limiting the present invention. Various inventive features are described below that can each be used independently of one another or in combination with other features.

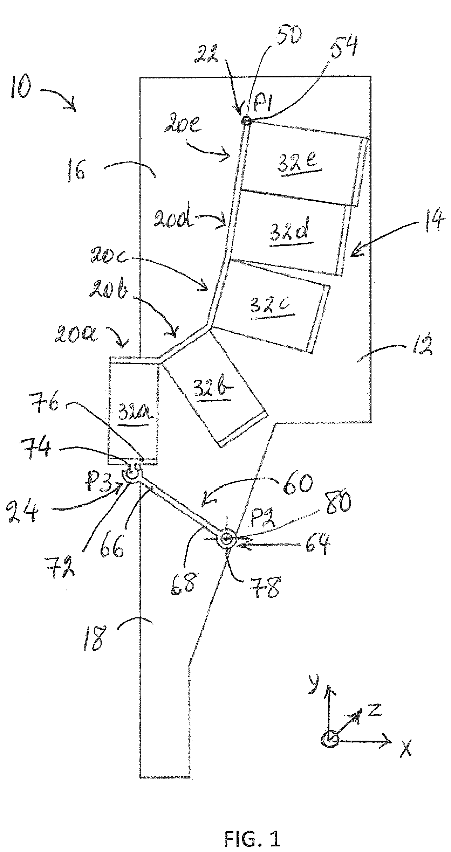

FIGS. 1-5 illustrate an example embodiment of an adaptable mouthpiece assembly 10 being used for teeth cleaning. Mouthpiece assembly 10 can be incorporated in an oral care device, such as a power toothbrush, wherein mouthpiece assembly 10 is part of a brush head. The brush head can be J-shaped cleaning several teeth on one side of a dental arch at the same time. In case one or more teeth are missing, the gums at these locations can be cleaned.

Mouthpiece assembly 10 is described herein as an assembly for an upper mouthpiece. However, the disclosed structure can equally apply to a lower mouthpiece. In some implementations, a toothbrush can include a single mouthpiece assembly for cleaning an upper or lower dental arch. In other implementations, mouthpiece assemblies can be present in both upper and lower mouthpieces to clean teeth and gums of the upper and lower dental arches simultaneously. For J-shaped toothbrush, the toothbrush can be turned around to use on the opposite side of the mouth whereby upper and lower mouthpieces are reversed. Each mouthpiece assembly can be adapted to clean a partial set of teeth or a complete set of teeth, or even a single tooth.

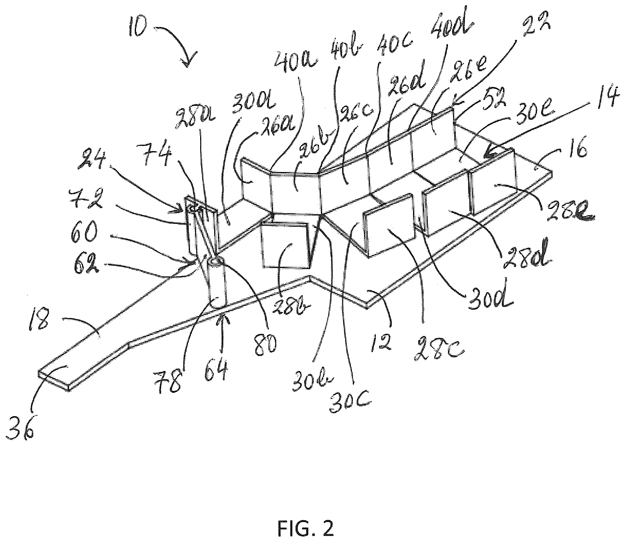

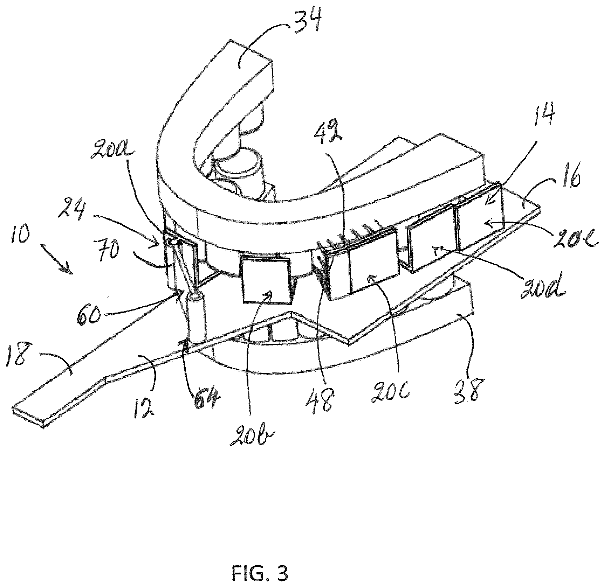

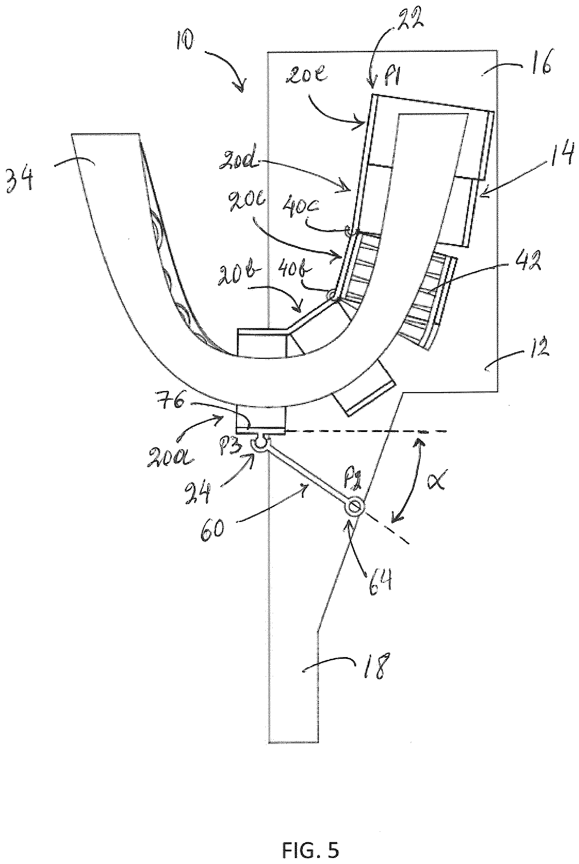

Mouthpiece assembly 10 includes a support plate 12 and a chain member 14, as shown in FIGs. 1, 2, 3, and 5. In FIGs. 1 and 2, mouthpiece assembly 10 is shown in an unused state wherein chain member 14 has an undefined shape. In other embodiments, chain member 14 can change its configuration when inserted into the mouth of the user and conforms to teeth and gums of an upper dental arch 34, as illustrated in FIGs. 3 and 5. Chain member 14 can similarly conform to lower dental arches, as well as to variations in dental arches between individual users.

FIG. 1 indicates three mutually orthogonal axes, i.e., an x-axis, a y-axis and a z-axis. The x-axis and y-axis define an x-y-plane, herein referred to as a horizontal plane, which is substantially parallel to support plate 12 and substantially perpendicular to lingual and facial side surface of the teeth in the dental arch of the user.

In one implementation, an oral care device may include an upper mouthpiece assembly, a lower mouthpiece assembly, and a driving mechanism to provide relative vertical movement of the upper mouthpiece assembly and the lower mouthpiece assembly. Such an oral care device may have two mouthpiece assemblies, mirrored in the z-direction with a predetermined distance between two support plates. Between the support plates of the upper and lower mouthpiece assemblies, a driving mechanism can be disposed. In some implementations, the driving mechanism can be a bladder which can be inflated/deflated with a predetermined frequency resulting in a relative vertical movement of the upper mouthpiece assembly with respect to the lower mouthpiece assembly. In other implementations, alternatives to enforce the vertical movement may be present.

Support plate 12 consists of a thin elongated structure dimensioned to fit in the mouth of a user. The embodiment shown in FIGs. 1-3 and 5 illustrates a basic form of support plate 12. Support plate 12 has a distal portion 16 and a proximal portion 18. In a top view, distal portion 16 has a general rectangular shape. Proximal portion 18 may serve as a handle or can be coupled to a handle extension by which the user can insert and remove mouthpiece assembly 10 into and from the mouth. A lingual side of proximal portion 18 is formed as a straight extension of the lingual side of distal portion 16. A facial side of proximal portion 18 has a slanted outline with a narrow portion at the proximal edge of support plate 12 and slanting towards the facial side, merging with distal portion 16 about midway the width of support plate 12. Support plate 12 further has a top surface 36 for supporting chain member 14 and configured to face upper dental arch 34. A bottom surface faces lower dental arch 38. The bottom surface can be adapted to be operatively coupled to a driving mechanism.

In other embodiments, the contours of support plate 12 can be adapted to make mouthpiece assembly 10 more ergonomic and user friendly. For example, contours at a lingual side of support plate 12 can be adjusted to provide room for the tongue, while outer contours at facial sides of support plate 12 can be adapted to follow the curvature of the dental arch and avoid interfering with the tissue of the inner cheek.

Support plate 12 can be made from a relatively rigid material, such as a moldable glass filled plastic, an overmolded steel plate, or any other suitable material.

Chain member 14 consists of five shackles 20a-20e that are arranged successively on support plate 12. Chain member 14 can move along the support plate in the horizontal plane in both an anterior-posterior direction and in a lateral-medial direction. When inserted into the mouth, chain member 14 moves from an undefined configuration to a configuration wherein chain member 14 is aligned with teeth of a portion of the dental arch of the user.

To maintain stiffness of chain member 14 in the z-direction and to allow for upward and downward movement of chain member 14, the number of shackles may be limited. In some embodiments, the number of shackles could be limited to three.

Anterior shackle 20a is the first shackle at a front terminal end of chain member 14, located in proximal portion 18 of support plate 12 corresponding to the position of the incisors. Anterior shackle 20a is coupled to support plate 12 via a movable pivot 24. Posterior shackle 20e is the last shackle at a back terminal end of chain member 14 and is located in distal portion 16 of support plate 12. Posterior shackle 20e is coupled to support plate 12 via a first fixed pivot 22.

In the example embodiment, shackles 20a-20e are distinct elements with a U-shaped vertical cross-section. The legs of the U-shaped structure of each shackle 20a-20e are formed by lingual vertical walls 26a-26e and opposite facial vertical walls 28a-28e. Central portions 30a-30e interconnect lingual vertical walls 26a-26e and facial vertical walls 28a-28e to form a bottom section of the U-shaped structure. When placed on support plate 12, lingual vertical walls 26a-26e run upward and away from support plate 12 and are adapted to extend along the lingual side surfaces of the teeth. Facial vertical walls 28a-28e also extend upward and away from support plate 12 and are adapted to extend along the facial side surfaces of the teeth. Central portions 30a-30e have top surfaces 32a-32e that fit against the horizontal surfaces of the teeth. As used herein, a horizontal surface of the teeth refers to the biting or chewing surfaces of the teeth, in particular the incisal surface of an incisor or canine, and occlusal surface of a premolar or molar. Each central portion 30a-30e also has a bottom surface (not shown) facing support plate 12.

The dimensions of each individual shackle 20a-20e can be determined by the teeth they are intended to accommodate. For example, since anterior shackle 20a is intended to accommodate one of the incisor or canine teeth, its length and width can be smaller than the length and width of posterior shackle 20e, which is intended to accommodate a molar. In other embodiments, a shackle at the distal end, for example posterior shackle 20e, can be made longer since there is less curvature at the corresponding location in the dental arch.

Shackles 20a-20e can be coupled to each other via hingeable connection elements 40a-40d. In particular, hingeable connection elements 40a-40d couple adjoining shackles 20a and 20b, 20b and 20c, 20c and 20d, and 20d and 20e, respectively, at the lingual side of chain member 14. Facial vertical walls 28a-28e and central portions 30a-30e are not interconnected, allowing each of shackles 20a-20e to rotate around respective hingeable connection elements 40a-40d.

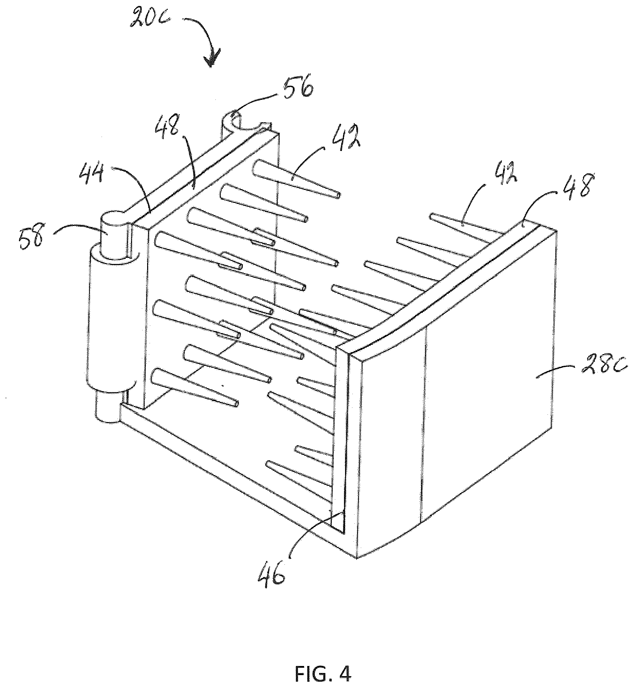

As illustrated in FIG. 4, hingeable connection element 40c can include a knuckle 56 and a pin 58. Pin 58 extends along an edge of lingual vertical wall 26c. Knuckle 56 extends along an opposite edge of lingual vertical wall 26c. Pin 58 is paired with a knuckle of adjacent shackle 20b and knuckle 56 is paired with a pin of adjacent shackle 20d. In some embodiments, edges of adjoining lingual vertical walls 26a-26e may be connected to each other via clickable pivot points. In other embodiments, hingeable connection elements 40a-40d can be film hinges. In such embodiments, shackles 20a-20e could be built as a single part with flexible film hinges between individual shackles 20a-20e. In further embodiments, other suitable hinge systems can be used.

Chain member 14 can move in the horizontal plane, i.e., linear in the x-y direction and rotational around the z-axis. Individual shackles 26a-26e can rotate relatively to each other around hingeable connection elements 40a-40d and slide over support plate 12 in an anterior-posterior direction and in a lateral-medial direction. Movement of entire chain member 14 is limited by first fixed pivot 22 and second fixed pivot 64. Movement of shackles 26a-26e in the z-axis direction is provided by the driving mechanism and, in some embodiments, a driving mechanism may also provide movement in x and y directions.

In FIGs. 1 and 5, top views of shackles 20a-20e are shown as rectangular blocks. Since the inside curve length of chain member 14 is shorter than its outside curve length, there are gaps along the outside curve length. These gaps appear along the outer part of shackles 20a-20e, especially between those shackles corresponding to teeth in the front of the mouth where the curvature of the dental arch is more pronounced. The user may need to move the mouthpiece back and forth to provide cleaning action to all teeth surfaces.

In other embodiments, shackles 20a-20e can have an arcuate shaped facial side wall and/or lingual side wall (not shown) to compensate for gaps along the outer curve of the chain member. The degree of curvature of the lingual and/or facial side walls of the shackles can be balanced with the amount of freedom of movement that is desired for the shackles and the size range that the mouthpiece is intended to cover.

Shackles 20a-20e may be made of a sufficiently rigid material to have proper functioning hinges between the shackles so that in a downwards direction all shackles 20a-20e follow downward movement of support plate 12 since only shackles 20a and 20e are connected with the pivot points to support plate 12. In some embodiments, the shape of the shackles can be conical, tapered, or any other functional shape. In further embodiments, shackles may be formed in any other shape allowing easy insertion of the mouthpiece assembly around the dental arch of the user. Both the size and shape of the individual shackles, length and the pattern of the chain member can be optimized for a specific application.

Furthermore, shackles 20a-20e can be provided with a dental cleaning material suitable for removing debris and plaque from teeth. As can be seen in FIGs. 3-4, shackle 20c in mouthpiece assembly 10 is provided with bristles 42. Bristles 42 may be mounted on an interior surface 44 of lingual vertical wall 26c and on facial vertical wall 28c. Bristles 42 extend at substantially right angles from interior surface 44 of lingual vertical wall 26c and from interior surface 46 of facial vertical wall 28c. When in use, bristles 42 are directed to lingual and facial surfaces of the teeth or regions of the dental gums adjoining the tooth surfaces. The length of bristles 42 may be determined by corresponding tooth geometry and gum sensitivity. Bristle stiffness may also be varied to correspond with a particular dental arch anatomy and/or application. Bristles 42 may be mounted on a pad 48 that is adhered to interior surface 44. In some embodiments, bristles may extend at an angle. In other embodiments, bristles may be configured in various tuft configurations. In further embodiments, instead of using bristles, other teeth cleaning structures can be used including pads or other cleansing elements.

Posterior shackle 20e has a first fixed pivot 22 anchored to support plate 12 at location P1 on the lingual side of support plate 12. Lingual vertical wall 26e of posterior shackle 20e can have a hollow cylindrical element 50 extending in the vertical direction along a distal edge 52 of lingual vertical wall 26e. Hollow cylindrical element 50 houses a pin 54 which allows rotation of cylindrical element 50 around pin 54. Pin 54 is secured to support plate 12 and extends upward from support plate 12 to form first fixed pivot 22. As such, posterior shackle 20e and chain member 14 can rotate around fixed pivot 22. In other embodiments, other types of hinge systems may be used to accomplish the rotation around first fixed pivot 22. In some embodiments, a different shackle may serve as a first fixed pivot point.

Anterior shackle 20a is hingeably coupled to support plate 12 via movable pivot 24 at location P3. An arm 60 interconnects movable pivot 24 with second fixed pivot 64. Arm 60 includes a rectangular plate 62 that can rotate, with its shortest side, around second fixed pivot 64. Rectangular plate 62 is positioned substantially perpendicular to support plate 12 and has a height corresponding to the height of shackle 20a. Arm 60 has a movable end 66 and a fixed end 68.

Movable pivot 24 is formed by a C-shaped coupling element 72 and a connecting element 74. C-shaped coupling element 72 is positioned at a vertical edge 70 of movable end 66 of arm 60. Connecting element 74 protrudes from an exterior surface 76 of facial vertical wall 28a of shackle 20a. Connecting element 74 consists of a vertically elongated knob shape around which C-shaped coupling element 72 can partially rotate. The shape and configuration of coupling element 72 complements the shape and configuration of connecting element 74 such that a pivotal connection is achieved. Rotation of movable pivot 24 is limited by exterior surface 76 of anterior shackle 20a.

Second fixed pivot 64 is formed by a barrel 78 and a pin 80. Pin 80 is secured to support plate 12 in proximate portion 18 at location P2 towards a lateral/facial edge of support plate 12. Pin 80 extends upward from support plate 12. Barrel 78 is coupled to fixed end 68 of arm 60 by extending along a vertical edge of elongated plate 62 and pivotably houses pin 80 to form a hinge which allows rotation of arm 60 around pin 80. The position of second fixed pivot 64 and length of arm 60 is determined by the amount of movement that is desired for chain member 14.

When moving mouthpiece assembly 10 back and forth in the mouth, the movement force from a handle portion, for example proximal portion 18, of support plate 12 on anterior shackle 20a is in the rotational direction of arm 60 between location P2 and P3. FIG. 5 illustrates an angle α between exterior surface 76 of anterior shackle 20a and arm 60 which determines the degree of rotation that is allowed between exterior surface 76 of anterior shackle 20a and arm 60. When in use, angle α is also determined by the forces on the bristles in anterior shackle 20a. Angle α can vary while chain member 14 moves. However, in the embodiment described herein, angle α should be between about 0 degrees and about 45 degrees to prevent blocking of the brushing movement.

In some positions, a portion of anterior shackle 20a or entire shackle 20a may move beyond the lingual edge of support plate 12 allowing the mouthpiece assembly thereby to clean half of the dental arch. However, if the dental arch is smaller, chain member 14 can cover much more than half of the arch. Depending on the shape and configuration of the mouth of the user, chain member 14 can be in many positions/orientations.

In other embodiments, arm 60 can be coupled to a different shackle of chain member 14 via a similar structural arrangement as described above. For example, arm 60 can be hingeably coupled to penultimate shackle 20b, instead of anterior shackle 20a, to increase the vertical stiffness of chain member 14.

When not in use, chain member 14 rests in an undefined configuration on support plate 12. When the user inserts mouthpiece assembly 10 into the mouth, first contact can be made with the distal portion 16 of mouthpiece assembly 10. The user can align posterior shackle 20e and/or other shackles at the distal portion 16 of support plate 12 to engage the back molars in the x-direction. By closing the mouth, more shackles can align with the teeth. Anterior shackle 20a and/or other shackles towards proximal portion 18 can be aligned in the y-direction, thereby conforming the configuration of the entire chain member 14 to the dental arch. A configuration of chain member 14 is adjustable by allowing shackles 20a-20e move sufficiently in the horizontal plane along the support plate between first fixed pivot 22 and movable pivot 24 such that the chain member adapts to a curvature of a dental arch.

In an upward direction, shackles 20a-20e are supported by support plate 12 and can move upwards as a whole. In a downward direction, shackles 20a-20e can move downwards due to stiffness in the interconnection between shackles 20a-20e as well as stiffness between shackles 20a-20e, first fixed pivot 22 and second fixed pivot 64.

In an embodiment wherein both upper and lower mouthpieces are inserted simultaneously, chain members of upper and lower mouthpieces can align with both upper and lower dental arches. Mouthpieces provided with the assembly described herein can be designed to allow for a predetermined range of variations in anatomy of dental arches. However, in case of malocclusions, such as an overbite or underbite, a user may need to move the jaws slightly in the two alignment directions to find a proper fit and to align upper and lower mouthpiece assemblies with the dental arches.

In some embodiments, the driving mechanism may include one or more inflatable bladders disposed between upper and lower mouthpieces. The inflatable bladder can be in fluid communication with a pneumatic device, the pneumatic device providing pressure to inflate the bladder and suction to deflate the bladder. The alternating inflation/deflation may actuate vertical up and down movement of the support plates of the upper and lower mouthpieces.

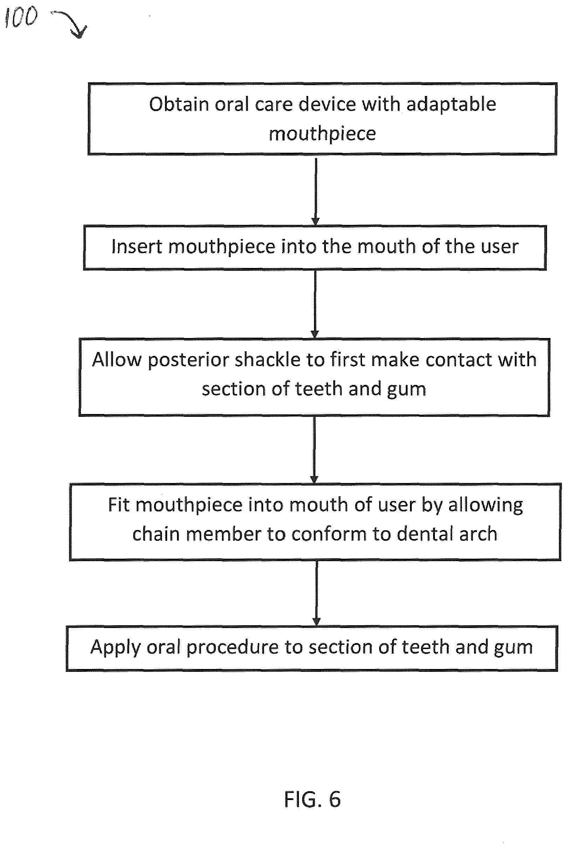

The inventive subject method further contemplates a method for applying oral care with an adaptable mouthpiece assembly. FIG. 6 is a high-level flow chart of a method 100 for applying oral care. Method 100 can include the steps of: obtaining an oral care device that includes an adaptable mouthpiece assembly as disclosed herein, inserting the mouthpiece assembly into the mouth of the user, allowing the posterior shackle to make contact with the section of teeth and gum, fitting the mouthpiece assembly to the mouth of the user such that the chain member conforms to the dental arch of the section of teeth and gum to be treated, and applying an oral care procedure to the section of teeth and gum.

The adaptable mouthpiece assembly, for example the embodiment as described above, includes a support plate configured to be inserted in a mouth of a user and has a distal portion and a proximal portion, and a chain member configured to accommodate a section of teeth and gum. The adaptable mouthpiece further includes a plurality of shackles that are hingeably coupled to each other and arranged successively on the support plate. A posterior shackle is coupled to the support plate via a first fixed pivot in the distal portion of the support plate and an anterior shackle is coupled to the support plate via a movable pivot in the proximal portion of the support plate. A configuration of the chain member is adjustable by allowing the plurality of shackles to move freely in a horizontal plane along the support plate between the first fixed pivot and the movable pivot such that the chain member adapts to a curvature of a dental arch at the section of teeth and gum to be treated. The chain member is in an undefined configuration prior to insertion but conforms to the dental arch of the section of teeth and gum to be treated when in use.

Although the invention has been described in detail for the purpose of illustration based on what is currently considered to be the most practical and preferred embodiments, it is to be understood that such detail is solely for that purpose and that the invention is not limited to the disclosed embodiments, but, on the contrary, is intended to cover modifications and equivalent arrangements that are within the spirit and scope of the appended claims. For example, it is to be understood that the present invention contemplates that, to the extent possible, one or more features of any embodiment can be combined with one or more features of any other embodiment.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one." In addition, singular references do not exclude a plurality. Thus, references to "a", "an", "first", "second" etc. do not preclude a plurality.

Reference signs in the claims are provided merely as a clarifying example shall not be construed as limiting the scope of the claims in any way.

The phrase "and/or," as used herein in the specification and in the claims, should be understood to mean "either or both" of the elements so conjoined, *i.e.,* elements that are conjunctively present in some cases and disjunctively present in other cases. Multiple elements listed with "and/or" should be construed in the same fashion, *i.e.,* "one or more" of the elements
so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, *i.e.,* the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (*i.e.* "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "holding," "composed of," and the like are to be understood to be open-ended, *i.e.,* to mean including but not limited to.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

## Claims

1. A mouthpiece assembly (10) for oral care application, comprising:
a support plate (12) configured to be inserted in a mouth of a user and having a distal portion (16) and a proximal portion (18);
a chain member (14) configured to accommodate a section of teeth and gum of the user and including a plurality of shackles (20a-20e) that are arranged successively on the support plate (12) and that are hingeably coupled to each other;
wherein a posterior shackle (20e) is coupled to the support plate (12) via a first fixed pivot (22) in the distal portion (16) of the support plate (12) and an anterior shackle (20a) is coupled to the support plate (12) via a movable pivot (24) in the proximal portion (18) of the support plate (12); and
wherein a configuration of the chain member (14) is adjustable by allowing the plurality of shackles (20a-20e) to move freely in a horizontal plane along the support plate (12) between the first fixed pivot (22) and the movable pivot (24) such that the configuration of the chain member (14) adapts to a curvature of a dental arch at the section of teeth and gum to be treated.

2. The mouthpiece assembly of claim 1, wherein the plurality of shackles (20a-20e) are movable along the support plate (12) in an anterior-posterior direction and in a lateral-medial direction.

3. The mouthpiece assembly of claim 1, wherein the anterior shackle (20a) is hingeably coupled to the support plate (12) via a second fixed pivot point (64).

4. The mouthpiece assembly of claim 1, wherein the movable pivot (24) is located on an arm (60) and the arm is coupled to the support plate (12) via a second fixed pivot (64).

5. The mouthpiece assembly of claim 4, wherein the second fixed pivot (64) is coupled to the support plate (12) in the proximal portion (18) of the support plate (12).

6. The mouthpiece assembly of claim 4, wherein an angle (α) formed between the arm (60) and an exterior surface (76) of the anterior shackle (20a) is between about 0 degrees and about 45 degrees.

7. The mouthpiece assembly of claim 1, wherein a penultimate shackle (20b) of the chain member (14) is coupled to the support plate (12) via a second fixed pivot (64).

8. The mouthpiece assembly of claim 1, wherein the plurality of shackles (20a-20e) include a U-shaped vertical cross-section.

9. The mouthpiece assembly of claim 8, wherein the plurality of shackles(20a-20e) are coupled to each other via a hingeable connection element (40a-40d).

10. The mouthpiece assembly of claim 9, wherein the hingeable connection element (40a-40d) between the plurality of shackles (20a-20e) extends along a lingual vertical wall (26a-26e) of the plurality of shackles (20a-20e).

11. The mouthpiece assembly of claim 1, wherein the chain member (14) includes at least three shackles.

12. The mouthpiece assembly of claim 1, wherein at least one of the plurality of shackles (20a-20e) includes a cleaning material.

13. An oral care device, comprising:
an upper mouthpiece assembly for receiving a section of teeth and gum situated in an upper jaw of a user;
a lower mouthpiece assembly for receiving a section of teeth and gum situated in a lower jaw of the user;
a driving mechanism to provide relative vertical movement of the upper mouthpiece assembly and the lower mouthpiece assembly; and
wherein the upper mouthpiece assembly and/or the lower mouthpiece assembly include a mouthpiece assembly (10) as recited in claim 1.

14. The oral care device of claim 13, wherein the plurality of shackles (20a-20e) are movable along the support plate (12) in an anterior-posterior direction and in a lateral-medial direction.

15. A method (100) for applying oral care, comprising:
obtaining an oral care device that includes an adaptable mouthpiece assembly including
a support plate configured to be inserted in a mouth of a user and having a distal portion and a proximal portion;
a chain member configured to accommodate a section of teeth and gum of the user and including a plurality of shackles that are arranged successively on the support plate and that are hingeably coupled to each other;
wherein a posterior shackle is coupled to the support plate via a first fixed pivot in the distal portion of the support plate and an anterior shackle is coupled to the support plate via a movable pivot in the proximal portion of the support plate; and
wherein a configuration of the chain member is adjustable by allowing the plurality of shackles to move freely in a horizontal plane along the support plate between the first fixed pivot and the movable pivot such that the configuration of the chain member adapts to a curvature of a dental arch at the section of teeth and gum to be treated;
inserting the mouthpiece assembly into the mouth of the user whereby the chain member is in an undefined configuration prior to insertion;
allowing the posterior shackle to make contact with the section of teeth and gum;
fitting the mouthpiece assembly to the mouth of the user such that the chain member conforms to the dental arch of the section of teeth and gum to be treated; and
applying an oral care procedure to the section of teeth and gum.
